(19) **Europäisches Patentamt / European Patent Office / Office européen des brevets**

(11) **EP 2 120 389 A1**

(12) **EUROPEAN PATENT APPLICATION**
published in accordance with Art. 153(4) EPC

(43) Date of publication:
**18.11.2009 Bulletin 2009/47**

(21) Application number: **08715121.3**

(22) Date of filing: **29.02.2008**

(51) Int Cl.:
**H04L 9/08** (2006.01)

(86) International application number:
**PCT/CN2008/070385**

(87) International publication number:
**WO 2008/113279 (25.09.2008 Gazette 2008/39)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.03.2007 CN 200710087225**

(71) Applicant: **Huawei Technologies Co., Ltd.**
**Longgang District, Shenzhen**
**Guangdong 518129 (CN)**

(72) Inventor: **LI, Chunqiang**
**c/o Huawei Technologies Co., Ltd.**
**Shenzhen (CN)**

(74) Representative: **Kreuz, Georg Maria et al**
**c/o Huawei Technologies**
**European Research Center**
**Riesstraße 25**
**D-80992 München (DE)**

(54) **A METHOD, SYSTEM AND COMMUNICATION DEVICE FOR GENERATING SESSION CRYPTOGRAPHIC**

(57) A method for generating a session key, a system, and a communication device are disclosed. The method includes: selecting, by a communication party, a temporary private key, and operating at least the temporary private key according to the parameters of the cryptosystem to generate a first message, and sending the first message to the opposite party; and after receiving the second message, operating, by the communication party, at least the second message and the temporary private key according to the parameters of the cryptosystem to generate a session key. The system includes a key management center and a communication device. The communication device includes: a temporary private key selecting unit, a message generating and sending unit, and a session key generating unit. In the disclosure, the session key generated after the communication party selects a temporary private key is variable, thus avoiding too much dependence on the key management center and improving the practicability and security of the key.

| A long-term private key and a long-term public key of both communication parties are generated | 101 |

↓

| Party A selects a temporary private key randomly | 102 |

↓

| Party B selects a temporary private key randomly | 103 |

↓

| Party A uses the long-term private key and the temporary private key to calculate out a message MAB, and sends the message to party B | 104 |

↓

| Party B uses the long-term private key and the temporary private key to calculate out a message MBA, and sends the message to party A | 105 |

↓

| Party A calculates the session key KA | 106 |

↓

| Party B calculates the session key KB | 107 |

FIG. 1

EP 2 120 389 A1

**Description**

FIELD OF THE INVENTION

The disclosure relates to network communication, and in particular, to a method and system for generating a session key, and a communication device.

BACKGROUND

In order to manage the public key effectively and certify the attribution relation between the owners of the public key and the public-private key pair, a digital certificate mechanism is applied. In the current network security, the Public Key Infrastructure (PKI) system uses a digital certificate mechanism to perform public key management. A Certification Authority (CA) organization responsible for issuing the public key certificate exists in the PKI system. The operation of the PKI system needs to be supported by a hierarchical CA and an online running certificate repository. The online running of the certificate repository occupies network bandwidth. Massive key management reduces the system performance, and gradually becomes a more and more noticeable problem of network security.

Currently, the key is bound to the key owner identifier in two modes. The first mode is: The key owner identifier is generated through the key. The Cryptographically Generated Address (CGA) is typical of this mode. The second mode is: The key corresponding to the identifier is determined through the identifier, namely, Identifier-Based Cryptography (IBC). There is a new public key management system - Identity-Based Encryption (IBE). In the IBE, the public key is not necessarily obtained from the public key certificate repository that runs online. Instead, a string, indicative of the user identity such as name, email address, and IP address, is used as a public key directly. The IBE needs no public key certificate or the relevant operation, thus simplifying the use and management of the public key.

For example, in the IBE-based security email system currently, the email account of the user or a derivative thereof may serve as a public key of the user. Generally, the account of the user is constant in a long term, and the corresponding public key does not change. Therefore, for two users who communicate frequently, the key used by them for encrypting the email does not change. Generally, if a key remains unchanged in a long term, the security of the key is reduced.

In the prior art, a Combined Public Key (CPK) cryptography is also provided. The CPK is also an identifier-based key management system, and is based on Public Key factor Matrixes (PKMs) and Secret/private Key factor Matrixes (SKMs). In this solution, a trustworthy key management center exists, which is responsible for generating PKMs and SKMs. The PKMs are open in the system, and the SKMs are in the custody of the key management center.

The key management center calculates out the factors that constitute the private key of the user according to the user identifier and a mapping algorithm, calculates out the private key of the user according to the private key factors, and delivers the private key together with the system parameters and the PKM to the user securely.

Afterward, according to the announced PKM, the communication party calculates out the public key of each user according to the user identifier and the corresponding mapping algorithm.

$$
SKM = \begin{bmatrix} S_{0,0} & S_{0,1} & \dots & S_{0,N-1} \\ S_{1,0} & S_{1,1} & \dots & S_{1,N-1} \\ \dots\dots\dots\dots\dots\dots\dots\dots \\ S_{M-1,0} & S_{M-1,1} & \dots & S_{M-1,N-1} \end{bmatrix} \qquad PKM = \begin{bmatrix} P_{0,0} & P_{0,1} & \dots & P_{0,N-1} \\ P_{1,0} & P_{1,1} & \dots & P_{1,N-1} \\ \dots\dots\dots\dots\dots\dots\dots\dots \\ P_{M-1,0} & P_{M-1,1} & \dots & P_{M-1,N-1} \end{bmatrix}
$$

Both parties to communication calculates out the shared key according to the public key of the user, the private key of each party, and the corresponding key exchange algorithm (such as the Diffie-Hellman key exchange algorithm based on the discrete logarithm and the elliptic curve). The calculation is as follows:

Assumption: Both parties to the communication are A and B, the key exchange algorithm based on the discrete logarithm is applied, and the system parameter is (p, g), where p is a prime number, g is a generator of the finite field Fp, and g is smaller than p.

Party A and party B may calculate out the public key of the opposite party according to the corresponding mapping algorithm and the PKM, and may calculate out a shared key according to the key exchange algorithm and their own private key.

In the process of implementing the disclosure, the inventor finds that: When both communication parties use their own private key and the public key of the opposite party to calculate the corresponding shared key, the calculated shared key keeps unchanged in a long term. That is because the public key and the private key for calculating the shared key of both parties remain unchanged in the long term, the identifier of the communication entity decides their corresponding public-and-private key pair, and the identifier of the communication entity remains unchanged in a long term.

SUMMARY

Considering that the security in the identity-based combined key management system in the prior art is low because the calculated shared key remains unchanged in the long term, a method and system for generating a session key, and a communication device are provided in various embodiments of the disclosure. The technical solution is as follows.

A method for generating a session key is provided in an embodiment of the disclosure. Based on a cryptosystem, the method includes:

selecting, by a communication party, a first temporary private key, operating at least the first temporary private key according to parameters of the cryptosystem, and sending a first message to the opposite party; and

operating at least the second message and the first temporary private key according to the parameters of the cryptosystem to generate the first session key after receiving the second message, where the second message is generated by the opposite party after at least the second temporary private key selected by the opposite party is operated according to the parameters of the cryptosystem.

A system for generating a session key is provided in an embodiment of the disclosure. The system is a cryptosystem, and includes:

a key management center, adapted to: generate a long-term public key and a long-term private key according to the parameters of the cryptosystem, and send the long-term private key to the communication device securely; and

a communication device, adapted to: select a temporary private key; operate at least the temporary private key according to the parameters of the cryptosystem to generate a local message; send the local message to the communication device of the opposite party; operate at least the received opposite message and the temporary private key according to the parameters of the cryptosystem to generate a session key, where the opposite message is generated by the opposite communication device after at least the temporary private key selected by the opposite communication device is operated according to the parameters of the cryptosystem.

A communication device is provided in an embodiment of the disclosure. Based on a cryptosystem, the communication device includes:

a temporary private key selecting unit, adapted to select a temporary private key;

a message generating and sending unit, adapted to: operate at least the temporary private key selected by the temporary private key selecting unit according to parameters of the cryptosystem to generate a local message, and send the local message to the opposite communication device; and

a session key generating unit, adapted to: operate at least the received opposite message and the temporary private key selected by the temporary private key selecting unit according to the parameters of the cryptosystem to generate a session key, where the opposite message is generated by the opposite communication device after at least the temporary private key selected by the opposite communication device is operated according to the parameters of the cryptosystem.

The technical solution under the disclosure brings the following benefits:

The session key, generated after the communication party selects a temporary private key, is variable, thus avoiding too much dependence on the key management center and improving the practicability and security of the key.

BRIEF DESCRIPTION OF THE DRAWINGS

FIG. 1 is a flowchart of a method for generating a session key provided in the first embodiment of the disclosure;

FIG. 2 is a flowchart of a method for generating a session key provided in the second embodiment of the disclosure;

FIG. 3 is a flowchart of a method for generating a session key provided in the third embodiment of the disclosure;

FIG. 4 is a flowchart of a method for generating a session key provided in the fourth embodiment of the disclosure;

FIG. 5 shows a structure of a system for generating a session key provided in the fifth embodiment of the disclosure;

FIG. 6 shows a structure of a communication device provided in the sixth embodiment of the disclosure; and

FIG. 7 shows another structure of a communication device provided in the sixth embodiment of the disclosure.

DETAILED DESCRIPTION

The disclosure is detailed below by reference to accompanying drawings and exemplary embodiments, but the disclosure is not limited to the following embodiments.

In the identifier-based key management system provided in an embodiment of the disclosure, the communication party selects its own temporary private key to generate a session key through message exchange. Therefore, it is avoided that the shared key remains unchanged in a long term and the communication entity depends on the key management center excessively.

This embodiment supposes that both parties communicate with each other. In the identifier-based key management system, the PKM of the system is the PKM in the prior art, and the SKM of the system is the SKM in the prior art; party A and party B to the communication have their own private key (the private key is generated by the private key management center, and distributed to the corresponding communication entity securely) and public parameters of the system (including PKM); party A and party B may calculate out the long-term public key of the opposite party according to the identifier of the opposite party and the PKM of the system. That is, the user name is mapped according to a mapping algorithm to obtain N mapping value, and then the public key of the user is calculated out in the combined mode.

The communication party may be a communication device or communication terminal.

**Embodiment 1**

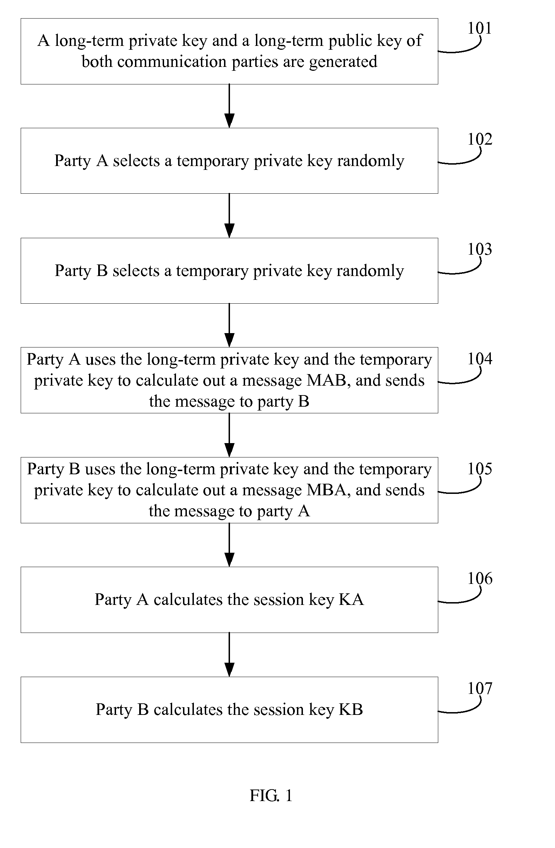

FIG. 1 is a flowchart of a method for generating a session key. In the cryptosystem based on the discrete logarithm in this embodiment, the system parameter $T = \{g, p\}$, where p is a prime number, g is a generator of the finite field $F_p$, and g is smaller than p.

The method for generating the session key between party A and party B includes:

Step 101: The key management center generates the long-term private key "a" of party A, long-term private key "b" of party B, long-term public key of party A: $P_A = g^a \bmod p$, and long-term public key of party B: $P_B = g^b \bmod p$, and sends a and b to party A and party B in a secure mode respectively.

Step 102: Party A selects a temporary private key "x" randomly, and stores it secretly.

Step 103: Party B selects a temporary private key "y" randomly, and stores it secretly.

Step 104: Party A calculates MAB = (PB) ax mod p = gabx mod p, and sends the message MAB to party B.

Step 105: Party B calculates MBA = (PA)^by mod p = g^aby mod p, and sends the message $M_{BA}$ to party A.

Step 106: After receiving the message $M_{BA}$ sent by party B, party A calculates the session key $K_A$.

$$K_A = (M_{BA})^x \bmod p = (g^{aby} \bmod p)^{\,x} \bmod p = g^{abxy} \bmod p.$$

Step 107: After receiving the message $M_{AB}$ sent by party A, party B calculates the session key $K_B$.

$$K_B = (M_{AB})^y \bmod p = (g^{abx} \bmod p)^{\,y} \bmod p = g^{abxy} \bmod p.$$

Therefore, the session key of party A and party B is K = KA = KB.

In this embodiment, there is no limitation to the sequence of steps 102, 103, 104, 105, 106, and 107. These steps may be executed in a rearranged sequence or executed simultaneously.

**Embodiment 2**

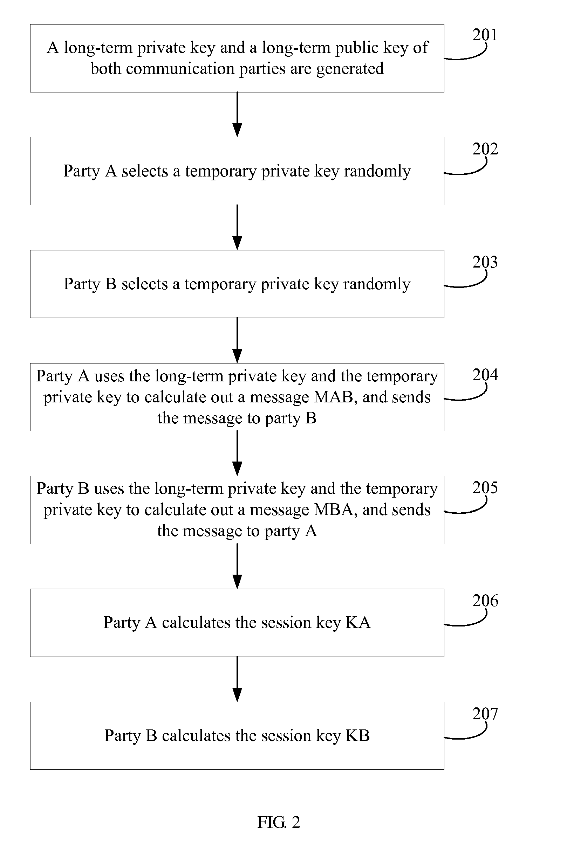

FIG. 2 is a flowchart of a method for generating a session key. In the cryptosystem based on the elliptic curve in this embodiment, the system parameters are T: (u, v, G, n, p), where p is a positive integer, Fp is a finite field, u and v are positive integers on the Fp, G is a basic point on the elliptic curve E (Fp), and n is a prime number and is the order of the basic point G.

The method for generating the session key between party A and party B includes:

Step 201: The key management center generates the long-term private key "a" of party A, long-term private key "b" of party B, long-term public key of party A: $P_A$ = a*G mod p, and long-term public key of party B: $P_B$ = b*G mod p, and sends a and b to party A and party B in a secure mode respectively.

Step 202: Party A selects a temporary private key "x" randomly, and stores it secretly.

Step 203: Party B selects a temporary private key "y" randomly, and stores it secretly.

Step 204: Party A calculates MAB = a * x * (PB) mod p = a * x * (b * G) mod p, and sends the message MAB to party B.

Step 205: Party B calculates $M_{BA}$ =b*y* ($P_A$) mod p =b*y*(a*G) mod p, and sends the message $M_{BA}$ to party A.

Step 206: After receiving the message $M_{BA}$ sent by party B, party A calculates the session key $K_A$.

$$K_A = (M_{BA})^x \bmod p = x * ( b * y * (a * G) \bmod p) \bmod p = abxy * G \bmod p.$$

Step 207: After receiving the message $M_{AB}$ sent by party A, party B calculates the session key $K_B$.

$$K_B = (M_{AB})^y \bmod p = y * ( a * x * (b * G) \bmod p) \bmod p = abxy * G \bmod p.$$

Therefore, the session key of party A and party B is K = KA = KB.

In this embodiment, there is no limitation to the sequence of steps 202, 203, 204, 205, 206, and 207. These steps may be executed in a rearranged sequence or executed simultaneously.

**Embodiment 3**

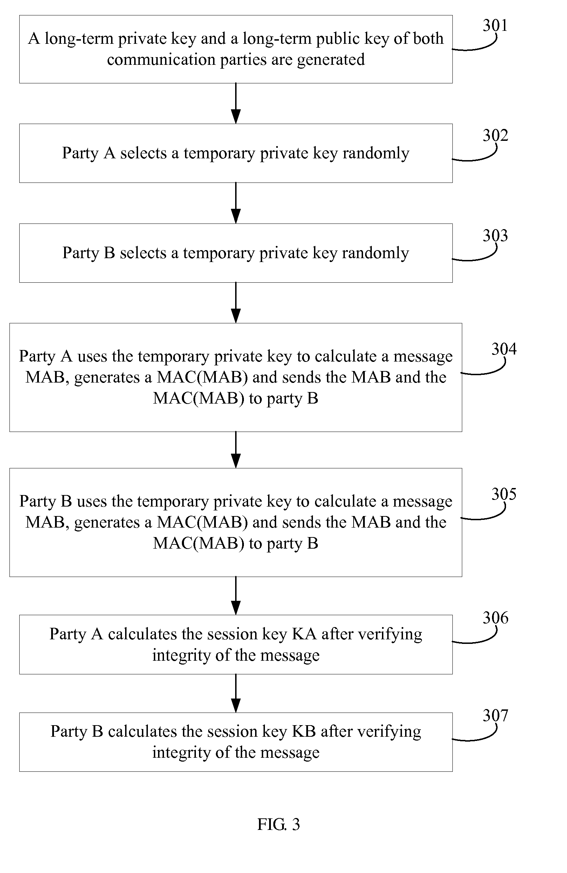

FIG. 3 is a flowchart of a method for generating a session key. In the cryptosystem based on the discrete logarithm in this embodiment, the system parameter T = {g, p}, where p is a prime number, g is a generator of the finite field Fp, and g is smaller than p.

The method for generating the session key between party A and party B includes:

Step 301: The key management center generates the long-term private key "a" of party A, long-term private key "b" of party B, long-term public key of party A: PA = ga mod p, and long-term public key of party B: PB = gb mod p, and sends a and b to party A and party B in a secure mode respectively.

Step 302: Party A selects a temporary private key "x" randomly, and stores it secretly.

Step 303: Party B selects a temporary private key "y" randomly, and stores it secretly.

Step 304: Party A calculates MAB = gx mod p and s = (PB) a mod p = gab mod p, and uses s to generate the Message Authentication Code (MAC) of the message MAB, namely, MAC (MAB). Party A sends the message MAB and the MAC (MAB) to party B.

Step 305: Party B calculates MBA = gy mod p and s = (PA) b mod p = gab mod p, and uses s to generate the MAC of the MBA, namely, MAC (MBA). Party B sends the message MBA and the MAC ($M_{BA}$) to party A.

Step 306: After receiving the message MBA sent by party B, party A checks integrity of the MBA according to the MAC (MBA). If the integrity check succeeds, party A calculates the session key KA. KA = (MBA)a * (PB)x mod p = (gay mod p) * (gbx mod p) mod p = gay+bx mod p.

Step 307: After receiving the message MAB sent by party A, party B checks integrity of the MAB according to the MAC (MAB). If the integrity check succeeds, party B calculates the session key KB. KB = (MAB)b * (PA)y mod p = (gbx mod p) * (gay mod p) mod p = gay+bx mod p.

Therefore, the session key of party A and party B is K = $K_A$ = $K_B$.

In this embodiment, there is no limitation to the sequence of steps 302, 303, 304, 305, 306, and 307. These steps may be executed in a rearranged sequence or executed simultaneously.

**Embodiment 4**

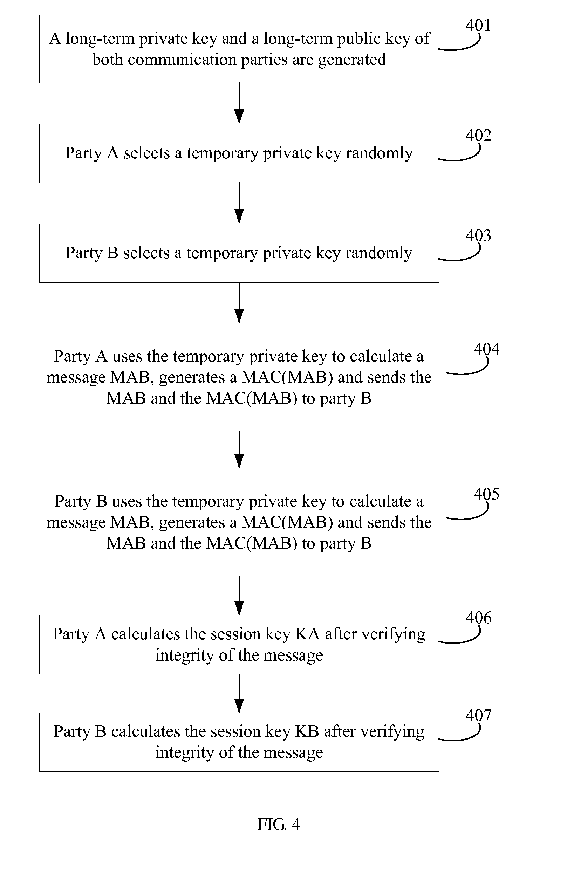

FIG. 4 is a flowchart of a method for generating a session key. In the cryptosystem based on the elliptic curve in this embodiment, the system parameters are T: (u, v, G, n, p), where p is a positive integer, Fp is a finite field, u and v are positive integers on the Fp, G is a basic point on the elliptic curve E (Fp), and n is a prime number and is the order of the basic point G.

The method for generating the session key between party A and party B includes:

Step 401: The key management center generates the long-term private key "a" of party A, long-term private key "b" of party B, long-term public key of party A: $P_A = a*G \bmod p$, and long-term public key of party B: $P_B = b*G \bmod p$, and sends a and b to party A and party B in a secure mode respectively.

Step 402: Party A selects a temporary private key "x" randomly, and stores it secretly.

Step 403: Party B selects a temporary private key "y" randomly, and stores it secretly.

Step 404: Party A calculates $M_{AB} = x * G \bmod p$ and $s = a * (P_B) \bmod p = ab * G \bmod p$, and uses s to generate the MAC of the $M_{AB}$, namely, MAC ($M_{AB}$). Party A sends the message $M_{AB}$ and the MAC ($M_{AB}$) to party B.

Step 405: Party B calculates $MBA = y * G \bmod p$ and $s = b * (PA) \bmod p = ab * G \bmod p$, and uses s to generate the MAC of the MBA, namely, MAC (MBA). Party B sends the message MBA and the MAC (MBA) to party A.

Step 406: After receiving the message MBA sent by party B, party A checks integrity of the MBA according to the MAC ($M_{BA}$). If the integrity check succeeds, party A calculates the session key $K_A$. $K_A = (a * (M_{BA}) + x * P_B) \bmod p = (ay + bx) * G \bmod p$.

Step 407: After receiving the message $M_{AB}$ sent by party A, party B checks integrity of the $M_{AB}$ according to the MAC ($M_{AB}$). If the integrity check succeeds, party B calculates the session key $K_B$. $K_B = (b * (M_{AB}) + y * P_A) \bmod p = (bx + ay) * G \bmod p$.

Therefore, the session key of party A and party B is $K = KA = KB$.

In this embodiment, there is no limitation to the sequence of steps 402, 403, 404, 405, 406, and 407. These steps may be executed in a rearranged sequence or executed simultaneously.

In the foregoing embodiment, the process of generating a session key generally involves use of these parameters: long-term private key of the communication party, public key of the opposite party (inclusive of the long-term private key of the opposite party), temporary private key of the communication party, and the message generated by the opposite party (inclusive of the temporary private key of the opposite party). However, the generation of the session key is not limited to the foregoing method. Here is another exemplary method:

(1) Party A generates a message $M_{AB}$ through calculation according to the temporary private key "x" and the long-term private key "a", for example, $M_{AB} = g^{ax} \bmod p$, and sends the message to party B. Likewise, party B generates a message $M_{BA}$ through calculation according to the temporary private key "y" and the long-term private key "b", for example, $M_{BA} = g^{by} \bmod p$, and sends the message to party A.

After receiving the message $M_{BA}$ sent by party B, party A calculates $K_A = (M_{BA})^{ax} \bmod p = g^{abxy} \bmod p$ according to the message $M_{BA}$, the long-term private key "a" and the temporary private key "x".

After receiving the message $M_{AB}$ sent by party A, party B calculates $K_B = (M_{AB})^{by} \bmod p = g^{abxy} \bmod p$ according to the message $M_{AB}$, the long-term private key "b" and the temporary private key "y".

(2) Party A generates a message $M_{AB}$ through calculation according to the temporary private key "x", long-term private key "a", and long-term public key of party B (namely, $P_B$), for example, $M_{AB} = (P_B)^{ax} \bmod p = (g^b \bmod p)^{ax} = g^{abx} \bmod p$, and sends the message to party B. Likewise, party B generates a message $M_{BA}$ through calculation according to the temporary private key "y", long-term private key "b", and long-term public key of party A (namely, $P_A$), for example, $M_{BA} = g^{aby} \bmod p$, and sends the message to party A.

After receiving the message $M_{BA}$ sent by party B, party A calculates $K_A = (M_{BA})^{ax} \bmod p = g^{abxy} \bmod p$ according to the message $M_{BA}$ and the temporary private key "x".

After receiving the message $M_{AB}$ sent by party A, party B calculates $K_B = (M_{AB})^{by} \bmod p = g^{abxy} \bmod p$ according to the message $M_{AB}$ and the temporary private key "y".

**Embodiment 5**

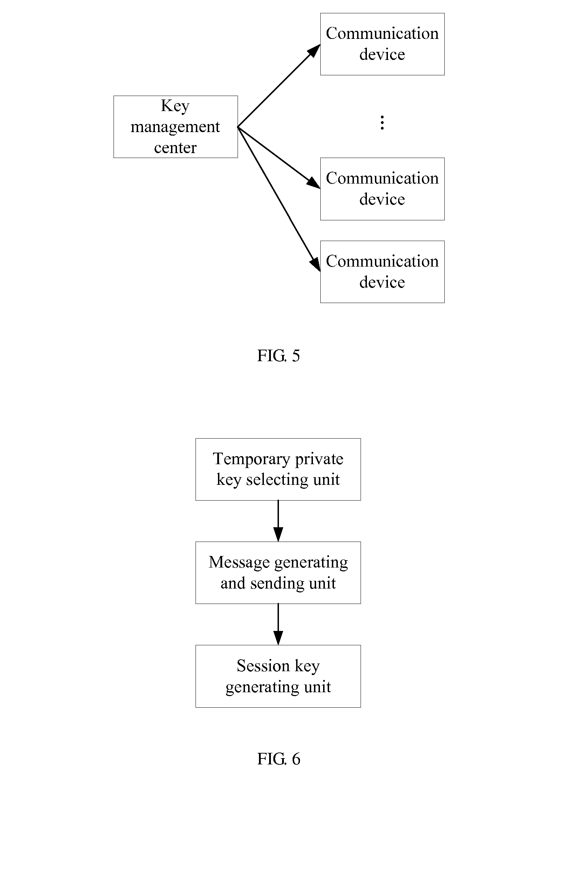

FIG. 5 shows a structure of a system for generating a session key. A system for generating a session key is provided in an embodiment of the disclosure. The system is a cryptosystem, and includes:

a key management center, adapted to: generate a long-term public key and a long-term private key according to the parameters of the cryptosystem, and send the long-term private key to the communication device securely; and
a communication device, adapted to: select a temporary private key, operate at least the temporary private key according to the parameters of the cryptosystem to generate a local message, send the local message to the opposite communication device, and operate at least the received opposite message and the temporary private key according to the parameters of the cryptosystem to generate a session key, where the opposite message is generated by the opposite communication device after at least the temporary private key selected by the opposite communication device is operated according to the parameters of the cryptosystem.

The communication device includes:

a temporary private key selecting unit, adapted to select a temporary private key;

a message generating and sending unit, adapted to: operate at least the temporary private key selected by the temporary private key selecting unit according to parameters of the cryptosystem to generate a local message, and send the local message to the opposite communication device; and

a session key generating unit, adapted to: operate at least the received opposite message and the temporary private key selected by the temporary private key selecting unit according to the parameters of the cryptosystem to generate a session key, where the opposite message is generated by the opposite communication device after at least the temporary private key selected by the opposite communication device is operated according to the parameters of the cryptosystem.

The communication device in this embodiment may select a temporary private key randomly, and the opposite communication device may also select the temporary private key randomly.

Besides, the system may be a cryptosystem based on the discrete logarithm or based on the elliptic curve. Moreover, the long-term public key generated by the key management center is obtained from mapping according to the identifier of the communication device.

This embodiment supposes that the cryptosystem is a cryptosystem based on the discrete logarithm. Two communication devices "A" and "B" exist in the system. The system parameter T = {g, p}, where p is a prime number, g is a generator of the finite field $F_p$, and g is smaller than p.

The key management center generates the long-term private key "a" of party A, long-term private key "b" of party B, long-term public key of party A: $P_A = g^a \bmod p$, and long-term public key of party B: $P_B = g^b \bmod p$, and sends a and b to party A and party B in a secure mode respectively.

Party A selects the temporary private key "x" randomly through the temporary private key selecting unit, and stores it secretly. Party B selects the temporary private key "y" randomly through the temporary private key selecting unit, and stores it secretly.

Party A calculates $M_{AB} = g^x \bmod p$ through the message generating and sending unit, and sends a message $M_{AB}$ to party B.

Party B calculates $M_{BA} = g^y \bmod p$ through the message generating and sending unit, and sends a message $M_{BA}$ to party A.

After receiving the message $M_{BA}$ sent by party B, party A calculates the session key $K_A$ through the session key generating unit.

$$K_A = (M_{BA})^a * (P_B)^x \bmod p = (g^{ay} \bmod p) * (g^{bx} \bmod p) \bmod p = g^{ay+bx} \bmod p.$$

After receiving the message $M_{AB}$ sent by party A, party B calculates the session key $K_B$ through the session key generating unit.

$$K_B = (M_{AB})^b * (P_A)^y \bmod p = (g^{bx} \bmod p) * (g^{ay} \bmod p) \bmod p = g^{ay+bx} \bmod p.$$

Therefore, the session key of party A and party B is $K = K_A = K_B$.

**Embodiment 6**

FIG. 6 shows a structure of the communication device provided in an embodiment of the disclosure. The communication device is based on a cryptosystem, and includes:

a temporary private key selecting unit, adapted to select a temporary private key;

a message generating and sending unit, adapted to: operate at least the temporary private key selected by the temporary private key selecting unit according to parameters of the cryptosystem to generate a local message, and send the local message to the opposite communication device; and

a session key generating unit, adapted to: operate at least the received opposite message and the temporary private key selected by the temporary private key selecting unit according to the parameters of the cryptosystem to generate a session key, where the opposite message is generated by the opposite communication device after at least the temporary private key selected by the opposite communication device is operated according to the parameters of the cryptosystem.

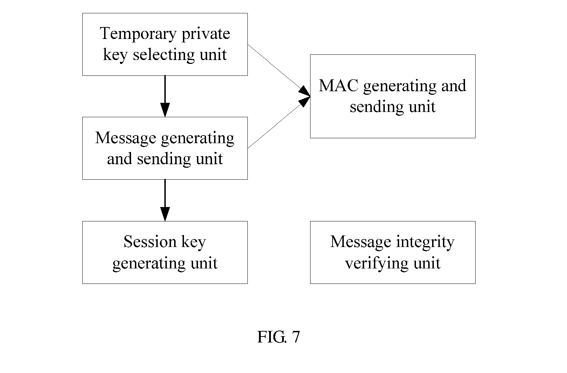

In order to enhance security, as shown in FIG. 7, the communication device further includes:

a MAC generating and sending unit, adapted to: operate at least the long-term private key stored at the local party and the long-term public key of the opposite communication device according to the parameters of the cryptosystem to generate a MAC of the local message after the message generating and sending unit generates the local message; and send the MAC to the opposite communication device; and

a message integrity verifying unit, adapted to: use the MAC of the received opposite message to verify integrity of the received opposite message, where the MAC of the opposite message is generated by the opposite communication device after the long-term public key of the local communication device and the long-term private key of the opposite communication device are operated according to the parameters of the cryptosystem.

The communication device in this embodiment may select a temporary private key randomly, and the opposite communication device may also select the temporary private key randomly. Besides, the cryptosystem may be a cryptosystem based on the discrete logarithm or based on the elliptic curve.

The technical solution provided in the foregoing embodiments may be implemented through software codes. The software codes may be stored in a computer-readable physical medium such as compact disk and hard disk.

In the identifier-based combined key management system in the foregoing embodiments, the session key generated through the temporary private key selected by both communication parties is variable, thus avoiding too much dependence on the key management center, improving the security, and making the identifier-based combined key management method really practicable.

Moreover, a MAC is generated to verify the message integrity, thus further perfecting the system security.

Although the invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

**Claims**

1. A method for generating a session key, wherein the method is based on a cryptosystem and comprises:

selecting, by a communication party, a first temporary private key, operating at least the first temporary private key according to parameters of the cryptosystem to generate a first message, and sending the first message to an opposite party; and

operating at least a second message and the first temporary private key according to the parameters of the cryptosystem to generate a first session key after receiving the second message, wherein the second message is generated by the opposite party after at least a second temporary private key selected by the opposite party is operated according to the parameters of the cryptosystem.

2. The method for generating a session key according to claim 1, wherein
the second message is generated by the opposite party after the second temporary private key selected by the opposite party, a second private key stored at the communication party, and a first long-term public key of the communication party are operated according to the parameters of the cryptosystem;
correspondingly, the generating of the first session key by operating at least the second message and the first temporary private key according to the parameters of the cryptosystem comprises:
generating the first session key by operating the second message and the first temporary private key according to the parameters of the cryptosystem.

3. The method for generating a session key according to claim 1, wherein
the second message is generated by the opposite party after the second temporary private key selected by the opposite party is operated according to the parameters of the cryptosystem;
correspondingly, the generating of the first session key by operating at least the second message and the first temporary private key according to the parameters of the cryptosystem comprises:
generating the first session key by operating the second message, the first temporary private key, and a first long-term private key stored by the communication party, and a second long-term public key of the opposite party according to the parameters of the cryptosystem.

4. The method for generating a session key according to claim 1, wherein:

the cryptosystem is the cryptosystem based on a discrete logarithm or based on an elliptic curve.

5. The method for generating a session key according to claim 2, wherein:

the first long-term public key is obtained from mapping according to an identifier of the communication party.

6. The method for generating a session key according to any one of claims 1-5, wherein:

after the communication party selects the first temporary private key and generates the first message by operating at least the first temporary private key according to the parameters of the cryptosystem, the method further comprises: generating a first Message Authentication Code (MAC), by operating the second long-term public key of the opposite party and the first long-term private key of the communication party according to the parameters of the cryptosystem, and sending the first MAC to the opposite party;

accordingly, after the communication party receives the second message, the method further comprises: receiving a second MAC and using the second MAC to verify integrity of the second message, wherein the second MAC is a MAC of the second message and is generated by the opposite party after the first long-term public key of the communication party and the second long-term private key of the opposite party are operated according to the parameters of the cryptosystem.

7. The method for generating a session key according to any one of claims 1-5, wherein:

the first temporary private key is selected by the communication party randomly.

8. The method for generating a session key according to any one of claims 1-5, wherein:

the second temporary private key is selected by the opposite party randomly.

9. A system for generating a session key, wherein the system is a cryptosystem and comprises:

a key management center, adapted to generate a long-term public key and a long-term private key according to parameters of the cryptosystem, and send the long-term private key to a communication device securely; and the communication device, adapted to: select a temporary private key, operate at least the temporary private key according to the parameters of the cryptosystem to generate a local message, send the local message to an opposite communication device, and operate at least a received opposite message and the temporary private key according to the parameters of the cryptosystem to generate the session key, wherein the opposite message is generated by the opposite communication device after at least the temporary private key selected by the opposite communication device is operated according to the parameters of the cryptosystem.

10. The system for generating a session key according to claim 9, wherein the communication device comprises:

a temporary private key selecting unit, adapted to select the temporary private key;
a message generating and sending unit, adapted to operate at least the temporary private key selected by the temporary private key selecting unit according to the parameters of the cryptosystem to generate the local message, and send the local message to the opposite communication device; and
a session key generating unit, adapted to operate at least the received opposite message and the temporary private key selected by the temporary private key selecting unit according to the parameters of the cryptosystem to generate the session key, wherein the opposite message is generated by the opposite communication device after at least the temporary private key selected by the opposite communication device is operated according to the parameters of the cryptosystem.

11. A communication device based on a cryptosystem, the device comprising:

a temporary private key selecting unit, adapted to select a temporary private key;
a message generating and sending unit, adapted to operate at least the temporary private key selected by the temporary private key selecting unit according to parameters of the cryptosystem to generate a local message, and send the local message to an opposite communication device; and
a session key generating unit, adapted to operate at least a received opposite message and the temporary private key selected by the temporary private key selecting unit according to the parameters of the cryptosystem to generate a session key, wherein the opposite message is generated by the opposite communication device after at least the temporary private key selected by the opposite communication device is operated according to the parameters of the cryptosystem.

12. The communication device of claim 11, further comprising:

a Message Authentication Code (MAC) generating and sending unit, adapted to operate at least a long-term private key stored in the communication device and a long-term public key of the opposite communication device according to the parameters of the cryptosystem to generate a MAC of the local message after the message generating and sending unit generates the local message, and send the MAC to the opposite communication device; and
a message integrity verifying unit, adapted to use a MAC of the received opposite message to verify integrity of the received opposite message, wherein the MAC of the opposite message is generated by the opposite communication device after the long-term public key of the local communication device and the long-term private key of the opposite communication device are operated according to the parameters of the cryptosystem.

A long-term private key and a long-term public key of both communication parties are generated | 101

Party A selects a temporary private key randomly | 102

Party B selects a temporary private key randomly | 103

Party A uses the long-term private key and the temporary private key to calculate out a message MAB, and sends the message to party B | 104

Party B uses the long-term private key and the temporary private key to calculate out a message MBA, and sends the message to party A | 105

Party A calculates the session key KA | 106

Party B calculates the session key KB | 107

FIG. 1

A long-term private key and a long-term public key of both communication parties are generated — 201

↓

Party A selects a temporary private key randomly — 202

↓

Party B selects a temporary private key randomly — 203

↓

Party A uses the long-term private key and the temporary private key to calculate out a message MAB, and sends the message to party B — 204

↓

Party B uses the long-term private key and the temporary private key to calculate out a message MBA, and sends the message to party A — 205

↓

Party A calculates the session key KA — 206

↓

Party B calculates the session key KB — 207

FIG. 2

A long-term private key and a long-term public key of both communication parties are generated     301

Party A selects a temporary private key randomly     302

Party B selects a temporary private key randomly     303

Party A uses the temporary private key to calculate a message MAB, generates a MAC(MAB) and sends the MAB and the MAC(MAB) to party B     304

Party B uses the temporary private key to calculate a message MAB, generates a MAC(MAB) and sends the MAB and the MAC(MAB) to party B     305

Party A calculates the session key KA after verifying integrity of the message     306

Party B calculates the session key KB after verifying integrity of the message     307

FIG. 3

A long-term private key and a long-term public key of both communication parties are generated — 401

↓

Party A selects a temporary private key randomly — 402

↓

Party B selects a temporary private key randomly — 403

↓

Party A uses the temporary private key to calculate a message MAB, generates a MAC(MAB) and sends the MAB and the MAC(MAB) to party B — 404

↓

Party B uses the temporary private key to calculate a message MAB, generates a MAC(MAB) and sends the MAB and the MAC(MAB) to party B — 405

↓

Party A calculates the session key KA after verifying integrity of the message — 406

↓

Party B calculates the session key KB after verifying integrity of the message — 407

FIG. 4

FIG. 5

FIG. 6

Temporary private
key selecting unit

MAC generating and
sending unit

Message generating
and sending unit

Session key
generating unit

Message integrity
verifying unit

FIG. 7

<div align="center">

# INTERNATIONAL SEARCH REPORT

</div>

| International application No. |
| --- |
| PCT/CN2008/070385 |

## A. CLASSIFICATION OF SUBJECT MATTER

H04L9/08(2006.01)i

According to International Patent Classification (IPC) or to both national classification and IPC

## B. FIELDS SEARCHED

Minimum documentation searched (classification system followed by classification symbols)

IPC: H04L9/-

Documentation searched other than minimum documentation to the extent that such documents are included in the fields searched

Electronic data base consulted during the international search (name of data base and, where practicable, search terms used)

CPRS,CNKI,WPI,EPODOC,PAJ: KEY, CODE, CIPHER+, CRYPTOGRA+, MESSAGE?, INFORMATION, PARAMETER, SESSION, CONVERSATION, ARITHMETIC, CALCULAT+, OPERAT+

## C. DOCUMENTS CONSIDERED TO BE RELEVANT

| Category* | Citation of document, with indication, where appropriate, of the relevant passages | Relevant to claim No. |
| --- | --- | --- |
| A | CN1455544A(ZHONGXING COMMUNICATIONS CO LTD SHENZHEN) 12 Nov. 2003(12.11.2003) the whole document | 1-12 |
| A | CN1423451A(HOANG K) 11 Jun. 2003(11.06.2003) the whole document | 1-12 |
| A | CN1889562A(HUAWEI TECHNOLOGIES CO LTD) 03 Jan. 2007(03.01.2007) the whole document | 1-12 |
| A | JP11317733A(FUJIKAWA A) 16 Nov. 1999(16.11.1999) the whole document | 1-12 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 20 May 2008(20.05.2008) | **05 Jun. 2008 (05.06.2008)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>　　CHAO Lulin<br>Telephone No. (86-10)62411499 |

Form PCT/ISA/210 (second sheet) (April 2007)

**EP 2 120 389 A1**

**INTERNATIONAL SEARCH REPORT**
Information on patent family members

International application No.

PCT/CN2008/070385

| Patent Documents referred in the Report | Publication Date | Patent Family | Publication Date |
|---|---|---|---|
| CN1455544A | 12.11.2003 | CN100373845C | 05.03.2008 |
| CN1423451A | 11.06.2003 | US2003099360A1 | 29.05.2003 |
| | | WO03047159A1 | 06.05.2003 |
| | | AU2002365343A1 | 10.06.2003 |
| | | TW576064A | 11.02.2004 |
| CN1889562A | 03.01.2007 | WO2007000115A1 | 04.01.2007 |
| JP11317733A | 16.11.1999 | None | |

Form PCT/ISA/210 (patent family annex) (April 2007)